# FASCICULE DE BREVET EUROPEEN

(11) **EP 1 106 804 B1**
(45) Date de publication et mention de la délivrance du brevet: **22.02.2006**
(21) Numéro de dépôt: 00403448.4
(22) Date de dépôt: 08.12.2000
(51) Int. Cl.: F02D 9/02, F02D 21/08, F02D 43/00, F02D 23/00, F02M 25/07, F01N 3/20, F02D 41/02

(54) **Procédé de commande d'un groupe motopropulseur de véhicules automobile pour augmenter la richesse des gaz d'échappement en phase de régénération d'un piège à oxydes d'azote.**
Verfahren zur Steuerung einer Antriebseinheit eines Kraftfahrzeuges zur Anreicherung der Abgase während der Regeneration einer Stickoxidfalle
Control method for a motor vehicle drive unit to increase the richness of the exhaust gas during regeneration of a nitrogen oxide trap

(30) Priorité: 10.12.1999 FR 9915594
(43) Date de publication de la demande: 13.06.2001
(73) Titulaire: Renault s.a.s., 92100 Boulogne Billancourt (FR)
(72) Inventeur: Blanche, Pierre, 91490 Milly-La-Forêt (FR); Dubois, Philippe, 75015 Paris (FR); Philippe, Laurent, 91150 Etampes (FR)

(56) Documents cités:
- EP-A- 0 791 736
- EP-A- 0 829 623
- EP-A- 0 892 164
- EP-A- 0 916 829
- GB-A- 2 318 311
- US-A- 5 381 775

## Description

L'invention concerne un procédé, de commande d'un groupe motopropulseur de véhicule automobile.

L'invention concerne plus particulièrement un Procédé de commande d'un groupe motopropulseur de véhicule automobile comportant un moteur à combustion, notamment un moteur diesel ou un moteur à essence à mélange pauvre, un circuit d'admission d'air ou de mélange air/carburant et un circuit d'échappement, du type dans lequel le circuit d'admission comporte des moyens pour déterminer le débit d'air d'admission, ou des moyens pour déterminer la pression d'air d'admission, et des moyens de régulation du débit d'air d'admission du type dans lequel le circuit d'échappement relie l'échappement d'au moins une chambre de combustion d'un cylindre à une ligne de sortie d'échappement, avec interposition d'un piège à oxydes d'azote, et du type dans lequel une conduite de recircutation relie un point de prélèvement du circuit d'échappement, situé en amont du piège à oxydes d'azote, au circuit d'admission, avec interposition de moyens de régulation du débit des gaz d'échappement recirculés.

Les moteurs diesel et certains moteurs à essence, notamment à allumage commandé, fonctionnent avec des mélanges carburés pauvres, c'est à dire avec un excès d'oxygène. La combustion des mélanges pauvres produit des oxydes d'azote ou NOx qu'il est nécessaire de traiter par conversion catalytique.

Pour réduire les émissions de NOx une méthode consiste à stocker les NOx contenus dans les gaz d'échappement dans un piège à NOx encore appelé NOx-trap, et périodiquement, à traiter les NOx ainsi piégés en injectant massivement des substances réductrices telles que du carburant au cours d'une phase dite de régénération du piège à NOx.

Ce traitement des NOx nécessite l'obtention cyclique d'une richesse des gaz d'échappement supérieure à un, c'est à dire qu'il est nécessaire de limiter la concentration d'espèces oxydantes par rapport à la concentration d'espèces réductrices dans les gaz d'échappement.

Le brevet EP-B-0.560.991 décrit un exemple d'un dispositif de stockage des NOx et différentes stratégies de régénération.

Les procédés connus sont généralement complexes et coûteux.

Le document GB-A-2.318.311 décrit un autre exemple d'un procédé pour régénérer un dispositif de stockage des NOx. Ce procédé propose ainsi d'enrichir les gaz d'échappement en espèces réductrices lors, de la regénération du dispositif de stockage des NOx. L'enrichissement des gaz d'échappement est réalisé en réintroduisant une partie des: gaz d'échappement dans le circuit d'admission d'air du moteur. Les gaz d'échappement résultant de la combustion du carburant dans ce mélange d'air et de gaz d'échappement recirculés produit des gaz d'échappement plus riches et donc plus réducteurs qui favorisent la régénération du dispositif de stockage. Ce procédé propose particulièrement de commander la proportion de gaz d'échappement recirculés en fonction de la richesse en oxygéné de l'air admis.

Cependant, ce procédé nécessite l'utilisation d'une sonde à oxygène dite "lambda" qui est onéreuse.

L'invention a pour but de remédier à ces inconvénients et d'améliorer le traitement des NOx.

Dans ce but l'invention propose un procédé de comntande d'un groupe motopropulseur du type décrit précédemment, caractérisé en ce que les moyens de régulation sont pilotés en fonction d'une valeur de consigne du débit d'air d'admission, ou de la pression d'air d'admission, en vue d'augmenter la richesse des gaz d'échappement lors d'une phase de régénération du piège à oxydes d'azote.

Selon d'autres caractéristiques de l'invention :
- on augmente la richesse des gaz d'écheppement en diminuant le débit d'air d'admission;
- lors d'une phase de régénération du piège à oxydes d'azote, seuls les moyens de régulation du débit d'air d'admission sont pilotés, les moyens de régulation du débit des gaz d'échappement recirculés étant ouverts au maximum et, en dehors des phases de régénération du piège à oxydes d'azote, seuls les moyens de régulation du débit des gaz d'échappement recirculés sont pilotés, les moyens de régulation du débit d'air d'admission étant ouverts au maximum;
- les moyens de régulation du débit d'air d'admission et des gaz d'échappement recirculés sont pilotés en boucle fermée par un correcteur d'asservissement du type proportionnel intégral;
- le procédé comporte une cartographie des valeurs de consigne du débit d'air d'admission, ou de la pression d'air d'admission, pour les phases de régénération du piège à oxydes d'azote, et une autre cartographie pour les phases de fonctionnement situées en dehors des phases de régénération, chaque cartographie dépendant notamment du régime et du couple moteur;
- la conduite de recirculation comporte des moyens de refroidissement des gaz d'échappement recirculés ;
- pour un groupe motopropulseur comportant un moteur suralimenté par un turbocompresseur dont la turbine est située entre le point de prélèvement et le piège à oxydes d'azote, et dont le compresseur est situé en amont des moyens de régulation du débit d'air d'admission, un dispositif de refroidissement de l'air de suralimentation est interposé dans le circuit d'admission entre les moyens de régulation du débit d'air d'admission et le compresseur;
- pour un groupe motopropulseur dont le turbocompresseur comporte une conduite de décharge des gaz d'échappement qui peut être obturée par une vanne de décharge, lorsque les moyens de régulation sont pilotés en fonction de la valeur de consigne du débit d'air d'admission, la vanne de décharge est pilotée de manière similaire aux moyens de régulation, et lorsque les moyens de régulation sont pilotés en fonction de la pression d'air d'admission**,** la vanne de décharge est ouverte :

- les moyens pour déterminer le débit d'air d'admission comportent soit un débimètre, soit un simulateur qui détermine le débit d'air d'admission à partir des mesures d'un capteur de température et d'un capteur de pression.

D'autres caractéristiques et avantages de l'invention apparaîtront à la lecture de la description détaillée qui suit pour la compréhension de laquelle on se reportera aux dessins annexés dans lesquels :
- la figure 1 représente schématiquement un groupe motopropulseur commandé par un procédé conforme aux enseignements de l'invention;
- la figure 2 est un schéma qui illustre le fonctionnement du procédé commande selon l'invention en dehors des phases de régénération du piège à oxydes d'azote; et
- la figure 3 est un schéma qui illustre le fonctionnement du procédé de commande selon l'invention lors d'une phase de régénération du piège à oxydes d'azote.

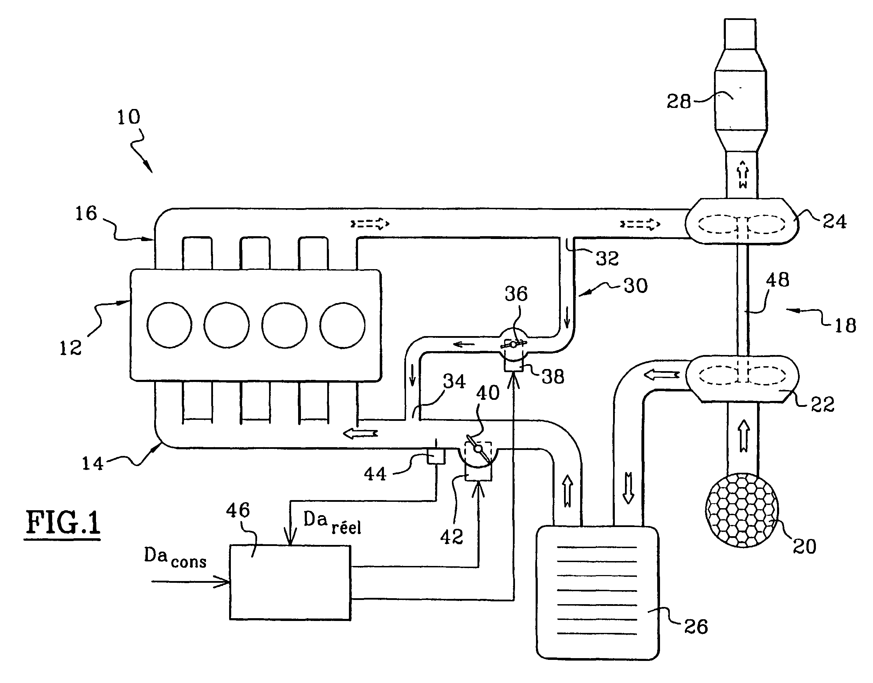

La figure 1 représente un groupe motopropulseur 10 commandé par un procédé selon l'invention.

Le groupe motopropulseur 10 est composé principalement d'un moteur à combustion 12, d'un circuit d'admission 14, d'un circuit d'échappement 16 et ici d'un turbocompresseur 18.

Un filtre à air 20. qui est situé en amont du circuit d'admission 14, permet de retenir les particules présentes dans l'air frais provenant de l'atmosphère.

Le turbocompresseur 18 comprend un compresseur 22 qui met sous pression de l'air frais atmosphérique et une turbine 24 qui fournit l'énergie mécanique nécessaire à l'entraînement du compresseur 22.

Un dispositif de refroidissement 26 permet de refroidir l'air d'admission provenant du compresseur 22.

Un piège à oxydes d'azote ou NOx 28 est interposé dans l'échappement du moteur 12 et en aval de la turbine 24 du turbocompresseur 18.

Un circuit de recirculation 30 des gaz d'échappement est branché en dérivation entre le circuit d'échappement 16 et le circuit d'admission 14.

A cet effet, les gaz d'échappement sont prélevés en un point 32 de prélèvement du circuit d'échappement 16 où la pression des gaz d'échappement est élevée, c'est-à-dire en amont de la turbine 24. Ils sont ensuite réintroduits en un point 34. de recirculation du circuit d'admission 14, en aval du dispositif de refroidissement 26 de l'admission.

La recirculation des gaz d'échappement est réalisée de façon naturelle, grâce à la différence de pressions qui existe entre le circuit d'échappement 16 et le circuit d'admission 14.

Un volet de recirculation 36 est monté dans le circuit de recirculation 30 de façon à réguler le débit des gaz d'échappement recirculés qui sont destinés à être mélangés avec de l'air frais du circuit d'admission 14.

L'ouverture du volet de recirculation 36 est commandée par un actionneur.de recircutation 38.

Selon une variante (non représentée), la conduite de recirculation 30 peut comporter un dispositif de refroidissement des gaz d'échappement recirculés.

Un volet d'admission 40 est monté dans le circuit d'admisston 14 de façon à réguler le débit d'air d'admission. Avantageusement ce volet d'admission 40 est monté entre le point 34 de recirculation et le dispositif de refroidissement de l'admission 26.

L'ouverture du volet d'admission 40 est commandée par un actionneur d'admission 42.

On note que, en position fermée, le volet d'admission 40 n'obture pas complètement le circuit d'admission .14 de sorte qu'il y ait toujours un débit d'air minimum Daₘᵢₙ à l'admission.

Entre le point 34 de recirculation et le volet d'admission 40, le circuit d'admission 14 comporte un débitmètre 44 qui mesure le débit d'air réel Da_{réel}·

Selon une variante de réalisation (non représentée) de l'invention, le débit d'air réel Da_{réel} peut être calculé par un simulateur à partir des mesures de capteurs de température et de pression.

Les ouvertures du volet d'admission 40 et du volet de recirculation 36 sont pilotées par l'intermédiaire d'une unité de pilotage 46 en fonction d'un débit d'air de consigne Da_{cons} et en utilisant les mesures de débit.d'air réel Da_{réel} effectuées par le débimètre 44.

Pour suivre au plus près la valeur de débit d'air de consigne Da_{cons,} l'unité de pilotage 46 comporte notamment un comparateur (non représenté), qui compare la valeur de débit d'air de consigne Da_{cons} à la valeur de débit d'air réel Da_{réel}, et un correcteur du type proportionnel intégral (non représenté) qui corrige le degré d'ouverture du volet de. recirculation 36 ou du volet d'admission 40 en fonction du résultat de la comparaison des débits.

Suivant le point de fonctionnement du moteur 12 et suivant que l'on se trouve dans une phase de régénération du piège à NOx 28 ou en dehors d'une telle phase, l'unité de pilotage 46 reçoit une valeur de consigne de débit d'air Da_{cons} qui est déterminée par cartographie.

Classiquement, un groupe motopropulseur 10 fonctionne de la manière suivante.

De l'air frais provenant de l'atmosphère est admis dans e circuit d'admission 14 après avoir traversé le filtre à air 20. Il est alors aspiré, puis comprimé par le compresseur 22. La compression de l'air provoque son échauffement. L'air est ensuite refroidi lors de son passage dans le dispositif de refroidissement 26. A la sortie de ce dernier, le circuit d'admission 14 conduit l'air frais comprimé dans une ou plusieurs chambres de combustion du moteur 12.

Après la combustion, les gaz d'échappement contiennent notamment des oxydes d'azoté et ils sont rejetés dans le circuit d'échappement 16.

À la sortie des cylindres du moteur 12, les gaz d'échappement sont à une pression supérieure à la pression atmosphérique. Ils sont alors détendus dans la turbine 24. Cette détente produit de l'énergie mécanique qui est transmise par un arbre 48 au compresseur 22.

Les gaz d'échappement pénètrent ensuite dans le piège à NOx 28 qui relient les oxydes d'azote jusqu'à leur traitement.

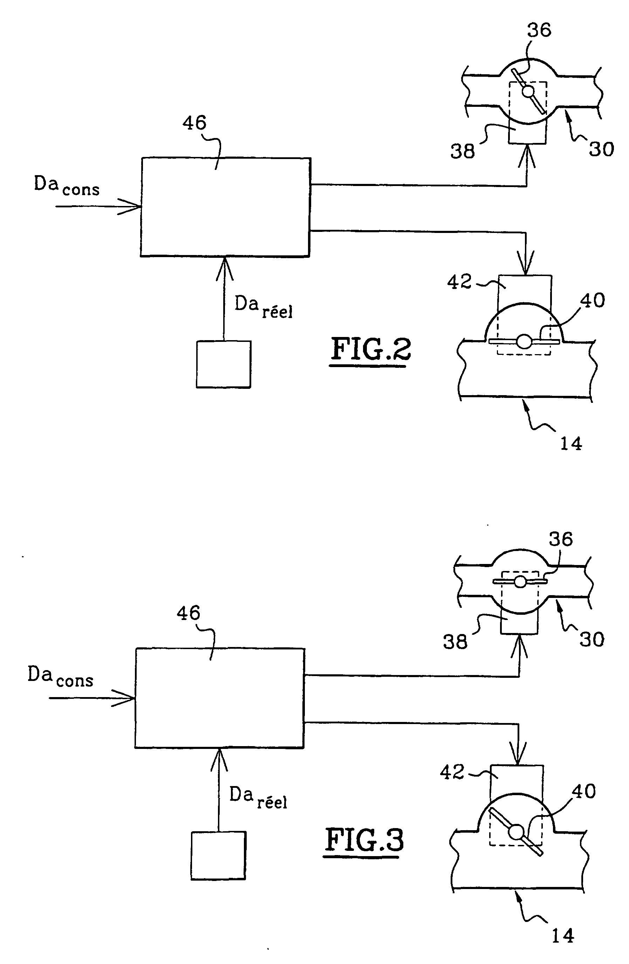

On décrira maintenant le fonctionnement du procédé selon l'ivention en se reportant aux schémas des figures 2 et 3.

Comme on l'a représenté à la figure 2, en dehors des phases de régénération du piège à NOx 28, l'unité de pilotage 46 commande l'ouverture maximum du volet d'admission 40 et elle pilote le degré d'ouverture du volet de recirculation 36 en fonction de la valeur de débit d'air de consigne Da_{cons}.

De manière similaire, comme on l'a représenté à la figure 3, lors des phases de régénération du piège à NOx 28, l'unité de pilotage 46 commande l'ouverture maximum du volet de recirculation 36 et elle pilote le degré d'ouverture du volet d'admission 40 en fonction de la valeur de débit d'air de consigne Da_{cons.}

Ici on ouvre le volet de recirculation 36 au maximum car on souhaite que le remplissage des cylindres du moteur 12 comporte un taux important de gaz recirculés.

Le débit des gaz recirculés Dg dépend de la section de passage des gaz dans la conduite de recirculation 30 et de la pression à l'admission. En effet, la recirculation est produite par la différence de pression entre le circuit d'échappement 16 et le circuit d'admission 14. Pour une section donnée de passage des gaz dans la conduite de recirculation, si l'on diminue la pression à l'admission, on augmente le débit des gaz recirculés Dg.

Le volet d'admission 40 permet de faire varier la pression à l'admission. Lorsqu'il est fermé, on diminue au maximum la section de passage de l'air d'admission ce qui diminue la pression d'admission à un minimum. On obtient alors le débit de gaz recirculés Dg maximum, pour une section donnée de passage des gaz recirculés dans la conduite 30.

L'augmentation du taux de gaz recirculés dans le remplissage des cylindres permet d'obtenir des gaz d'échappement plus riches donc; plus réducteurs, ce qui favorise la régénération du piège à NOx 28.

Les valeurs de consigne du débit d'air d'admission Da_{cons} sont déterminées par cartographie en fonction du régime et du couple moteur.

Avantageusement, on prévoit, une cartographie des valeurs de consigne du débit d'air d'admission Da_{cons} pour le fonctionnement du groupe motopropulseur 10 lors des phases de régénération du piège à NOx, et une autre cartographie pour son fonctionnement en dehors des phases de régénération.

En phase de régénération, la cartographie de débit d'air de consigne Da_{cons} est le résultat de plusieurs compromis, notamment de l'agrément de conduite recherché, des performances du moteur 12, de la limitation des fumées et de l'optimisation d'autres paramètres participant éventuellement à l'enrichissement des gaz d'échappement, par exemple le débit de post-injection d'un agent réducteur tel que du carburant.

Le bouclage de la commande du volet d'admission 40 sur une consigne de débit d'air d'admission Da_{cons}, en phase de régénération du piège à NOx 28, permet d'obtenir une richesse des gaz d'échappement prédictible et stable, y compris en tenant compte des dispersions industrielles et du vieillissement des composants du groupe motopropulseur 1.0.

Selon une variante de réalisation (non représentée) de l'invention, on remplace la consigne de débit d'air d'admission Da_{cons} par une consigne de pression à l'admission.

On remplace alors le débitmètre 44, ou le simulateur par un capteur de pression, le reste du dispositif demeurant inchangé.

On obtient un comportement du système équivalent puisque la pression à l'admission dépend du débit d'air d'admission réel Da_{réel} qui dépend du degré d'ouverture du volet d'admission 40.

On note que l'utilisation du débitmètre 44, ou du simulateur, et d'une consigne de débit d'air d'admission Da_{cons} est préférable lorsque l'on envisage de réaliser des phases de régénération du piège à NOx 28 pendant des périodes transitoires de charge, c'est à dire lorsque le moteur 12 ne fonctionne ni en pleine charge, ni en faible charge.

De préférence, dans le cas d'un moteur (12) suralimenté comportant une conduite de décharge des gaz d'échappement (non représentée) qui peut être obturée par une vanne de décharge, on commande la vanne de décharge en fonction du type de bouclage.

Ainsi, lorsque le bouclage est du type dans lequel les moyens de régulation (36, 38, 40, 42) sont pilotés en fonction d'une valeur de consigne (Da_{cons}) du débit d'air d'admission, la vanne de décharge est pilotée de manière similaire, et lorsque le bouclage est du type dans lequel les moyens de régulation (36, 38, 40, 42) sont pilotés en fonction d'une valeur de consigne de pression à l'admission, la vanne de décharge est ouverte.

Bien entendu le groupe motopropulseur 10 selon l'invention peut être équipé d'un catalyseur, notamment pour le traitement des oxydes d'azote.

Selon une variante de réalisation (non représentée) de l'invention, le moteur peut être du type atmosphérique, c'est à dire ne pas être suralimenté.

## Revendications

1. Procédé de commande d'un groupe motopropulseur (10) de véhicule automobile comportant un moteur à combustion (12), notamment un moteur diesel ou un moteur à essence à mélange pauvre, un circuit d'admission d'air ou de mélange air/carburant (14) et un circuit d'échappement (16), du type dans lequel le circuit d'admission (14) comporte des moyens (44) pour déterminer le débit d'air d'admission (Da_{réel}), ou des moyens pour déterminer la pression d'air d'admission, et des moyens de régulation (40, 42) du débit d'air d'admission (Da_{réel}), du type dans lequel le circuit d'échappement (16) relie l'échappement d'au moins une chambre de combustion d'un cylindre à une ligne de sortie d'échappement, avec interposition d'un piège (28) à oxydes d'azote, et du type dans lequel une conduite de recirculation (30) relie un point (32) de prélèvement du circuit d'échappement (16), situé en amont du piège (28) à oxydes d'azote, au circuit d'admission (14), avec interposition de moyens de régulation (36, 38) du débit des gaz d'échappement recirculés (Dg),
**caractérisé en ce que** les moyens de régulation (36, 38, 40, 42) sont pilotés en fonction d'une valeur de consigne du débit d'air d'admission (Da_{cons}), ou de la pression d'air d'admission, en vue d'augmenter la richesse des gaz d'échappement lors d'une phase de régénération du piège (28) à oxydes d'azote.

2. Procédé selon la revendication précédente, **caractérisé en ce que** l'on augmente la richesse des gaz d'échappement en diminuant le débit d'air d'admission (Da_{réel}).

3. Procédé selon l'une quelconque des revendications précédentes, **caractérisé en ce que**, lors d'une phase de régénération du piège (28) a oxydes d'azote, seuls les moyens de régulation (40, 42) du débit d'air d'admission (Da_{réel}) sont pilotés, .les moyens de régulation (36, 38) du débit des gaz d'échappement recirculés (Dg) étant ouverts au maximum et **en ce que**, en dehors des phases de régénération du piège (28) à oxydes d'azote, seuls les moyens de régulation (36, 38) du débit des gaz d'échappement recirculés (Dg) sont pilotés, les moyens de régulation (40, 42) du débit d'air d'admission (Da_{réel}) étant ouverts au maximum.

4. Procédé selon l'une quelconque des revendications précédentes, **caractérisé en ce que** les moyens de régulation (36, 38, 40, 42) du débit d'air d'admission (Da_{réel}) et des gaz d'échappement recirculés (Dg) sont pilotés en boucle fermée par un correcteur d'asservissement du type proportionnel intégral.

5. Procédé selon l'une quelconque: des revendications précédentes, **caractérisé en ce qu'**il comporte une cartographie des valeurs de consigne du débit d'air d'admission (Da_{cons}), ou de la pression d'air d'admission, pour les phases dé régénération du piège (28) à oxydes d'azote, et une autre cartographie pour les phases de fonctionnement situées en dehors des phases de régénération, chaque cartographie dépendant notamment du régime et du couple moteur.

6. Procédé selon l'une quelconque des revendications précédentes, **caractérisé en ce que** la conduite de recirculation (30) comporte des moyens de refroidissement des gaz d'échappement recirculés.

7. Procédé selon l'une quelconque des revendications précédentes, pour un groupe motopropulseur (10) comportant un moteur (12) suralimenté par un turbocompresseur (18) dont la turbine (24) est située entre le point (32) de prélèvement et le piège (28) à oxydes d'azote, et dont le compresseur (22) est situé en amont des moyens de régulation (40, 42) du débit d'air d'admission (Da_{réel}), **caractérisé en ce qu'**un dispositif de réfroidissement (26) de l'air de suralimentation est interposé dans le circuit d'admission (14) entre les moyens de régulation (40, 42) du débit d'air d'admission. (Da_{réel}) et le compresseur (22).

8. Procédé selon la revendication précédente, pour un groupe motopropulseur (10) dont le turbocompresseur (18) comporte une conduite de décharge des gaz d'échappement qui peut être obturée par une vanne de décharge, **caractérisé en ce que**, lorsque les moyens de régulation (36, 38, 40, 42) sont pilotés en fonction de la valeur de consigne du débit d'air d'admission (Da_{cons}), la vanne de décharge est pilotée de manière similaire aux moyens de régulation (36, 38, 40, 42), et lorsque les moyens de régulation (36, 38, 40, 42) sont piloté, en fonction de la pression d'air d'admission, la vanne de décharge est ouverte.

9. Procédé selon l'une quelconque des revendications précédentes, **caractérisé en ce que** les moyens pour déterminer le débit d'air d'admission (Da_{réel}) comportent soit un débitmètre (44), soit un simulateur qui détermine le débit d'air d'admission (Da_{réel}) à partir des mesures d'un capteur de température et d'un capteur de pression.

## Patentansprüche

1. Verfahren zur Steuerung einer Antriebsgruppe (10) eines Kraftfahrzeugs, welche einen Verbrennungsmotor (12) aufweist, insbesondere einen Dieselmotor oder einen Benzinmotor mit magerer Mischung, eine Lufteinlassleitung oder Luft/Kraftstoff-Mischungseinlassleitung (14) und eine Auslassleitung (16), von der Art, bei welchem die Einlassleitung (14) Mittel (44) zum Bestimmen des Lufteinlassdurchsatzes (Daᵣₑₐₗ) oder Mittel zum Bestimmen des Lufteinlassdrucks aufweist und Regelungsmittel (40, 42) des Lufteinlassdurchsatzes (Daᵣₑₐₗ) von der Art, bei welchem die Auslassleitung (16) den Auslass von mindestens einer Brennkammer eines Zylinders mit einer Auspuffleitung verbindet unter Zwischensetzen einer Stickstoffoxidfalle (28), und von der Art, bei welchem eine Rezirkulationsleitung (30) einen Entnahmepunkt (32) der Auslassleitung (16), der stromaufwärts der Stickstoffoxidfalle (28) angeordnet ist, mit der Einlassleitung (14) unter Zwischensetzen von Regelungsmitteln (36, 38) des Durchsatzes von rezirkulierten Abgasen (Dg) verbindet,
**dadurch gekennzeichnet, dass** die Regelungsmittel (36, 38, 40, 42) in Abhängigkeit von einem Sollwert des Lufteinlassdurchsatzes (Da_{sw}) oder des Lufteinlassdrucks gesteuert werden, um den Gehalt der Abgase während einer Regenerationsphase der Stickstoffoxidfalle (28) zu erhöhen.

2. Verfahren nach dem vorangegangenen Anspruch, **dadurch gekennzeichnet, dass** man den Gehalt der Abgase unter einem Verringern des Lufteinlassdurchsatzes (Daᵣₑₐₗ) erhöht.

3. Verfahren nach irgendeinem der vorangegangenen Ansprüche, **dadurch gekennzeichnet, dass** während einer Regenerationsphase der Stickstoffoxidfalle (28) lediglich die Regelungsmittel (40, 42) des Durchsatzes des Lufteinlasses (Daᵣₑₐₗ) gesteuert werden, wobei die Regelungsmittel (36, 38) des Durchsatzes von rezirkulierten Abgasen (Dg) maximal geöffnet sind, und dass außerhalb der Regenerationsphasen der Stickstoffoxidfalle (28) lediglich die Regelungsmittel (36, 38) des Durchsatzes der rezirkulierten Abgase (Dg) gesteuert werden, wobei die Regelungsmittel (40, 42) des Durchsatzes des Lufteinlasses (Daᵣₑₐₗ) maximal geöffnet sind.

4. Verfahren nach irgendeinem der vorangegangenen Ansprüche, **dadurch gekennzeichnet, dass** die Regelungsmittel (36, 38, 40, 42) des Lufteinlassdurchsatzes (Daᵣₑₐₗ) und der rezirkulierten Abgase (Dg) durch einen Regler vom Typ proportional-integral in geschlossener Schlaufe gesteuert werden.

5. Verfahren nach irgendeinem der vorangegangenen Ansprüche, **dadurch gekennzeichnet, dass** es eine Kartographie bzw. ein Kennfeld von Sollwerten des Lufteinlassdurchsatzes (Da_{sw}) oder des Lufteinlassdrucks für die Regenerationsphasen der Stickstoffoxidfalle (28) aufweist und eine andere Kartographie für die Betriebsphasen, welche außerhalb der Regenerationsphasen liegen, wobei jede Kartographie insbesondere von der Drehzahl und dem Moment des Motors abhängt.

6. Verfahren nach irgendeinem der vorangegangenen Ansprüche, **dadurch gekennzeichnet, dass** die Rezirkulationsleitung (30) Kühlmittel der rezirkulierten Abgase aufweist.

7. Verfahren nach irgendeinem der vorangegangenen Ansprüche für einen Antriebsstrang (10), welcher einen Motor (12) aufweist, der durch einen Turbolader (18) aufgeladen wird, dessen Turbine (24) zwischen dem Entnahmepunkt (32) und der Stickstoffoxidfalle (28) angeordnet ist und dessen Verdichter (22) stromaufwärts der Regelungsmittel (40, 42) des Lufteinlassdurchsatzes (Daᵣₑₐₗ) angeordnet ist, **dadurch gekennzeichnet, dass** eine Kühlvorrichtung (26) der Ladeluft in der Einlassleitung (14) zwischen den Regelungsmitteln (40, 42) des Lufteinlassdurchsatzes (Daᵣₑₐₗ) und dem Verdichter (22) zwischengesetzt ist.

8. Verfahren nach dem vorangegangenen Anspruch, für einen Antriebsstrang (10), bei dem der Turbolader (18) eine Ablassleitung für die Abgase aufweist, welche durch ein Ablassventil verschlossen werden kann, **dadurch gekennzeichnet, dass**, wenn die Regelungsmittel (36, 38, 40, 42) in Abhängigkeit vom Sollwert des Lufteinlassdurchsatzes (Da_{sw}) gesteuert werden, das Ablassventil auf ähnliche Weise zu den Regelungsmitteln (36, 38, 40, 42) gesteuert wird, und wenn die Regelungsmittel (36, 38, 40, 42) in Abhängigkeit vom Lufteinlassdruck gesteuert werden, das Ablassventil geöffnet wird.

9. Verfahren nach irgendeinem der vorangegangenen Ansprüche, **dadurch gekennzeichnet, dass** die Mittel zum Feststellen des Lufteinlassdurchsatzes (Daᵣₑₐₗ) entweder einen Durchflussmesser (44) oder einen Simulator aufweisen, welcher den Lufteinlassdurchsatz (Daᵣₑₐₗ) ausgehend von Messungen eines Temperatursensors und eines Drucksensors bestimmt.

## Claims

1. A control method for a drive unit (10) of an automobile vehicle comprising a combustion engine (12), in particular a diesel engine or a lean-mixture petrol engine, an air or air/fuel mixture intake circuit (14) and an exhaust circuit (16), of the type in which the intake circuit (14) comprises means (44) for determining the intake air flow (Daᵣₑₐₗ) or means for determining the intake air pressure and regulation means (40, 42) of the intake air flow (Daᵣₑₐₗ), of the type in which the exhaust circuit (16) connects the exhaust from at least one combustion chamber of a cylinder to an exhaust outlet line, with the interposition of a nitrogen oxide trap (28), and of the type in which a recycling duct (30) connects a take-up point (32) of the exhaust circuit (16), disposed upstream of the nitrogen oxide trap (28), to the intake circuit (14) with the interposition of means (36, 38) regulating the recycled exhaust gas flow (Dg), **characterised in that** the regulation means (36, 38, 40, 42) are driven as a function of a reference value of the intake air flow (Da_{cons}) or the intake air pressure, in order to augment the richness of the exhaust gases during a phase of regeneration of the nitrogen oxide trap (28).

2. A method as claimed in the preceding claim, **characterised in that** the richness of the exhaust gases is augmented by decreasing the intake air flow (Daᵣₑₐₗ)·

3. A method as claimed in any one of the preceding claims, **characterised in that**, during a phase of regeneration of the nitrogen oxide trap (28), only the regulation means (40, 42) of the intake air flow (Daᵣₑₐₗ) are driven, the regulation means (36, 38) of the recycled exhaust gas flow (Dg) being open to maximum, and **in that**, outside the phases of regeneration of the nitrogen oxide trap (28), only the regulation means (36, 38) of the recycled exhaust gas flow (Dg) are driven, the regulation means (40, 42) of the intake air flow (Daᵣₑₐₗ) being open to maximum.

4. A method as claimed in any one of the preceding claims, **characterised in that** the regulation means (36, 38, 40, 42) of the intake air flow (Daᵣₑₐₗ) and the recycled exhaust gases (Dg) are driven in a closed loop by a servo-corrector of the proportional integral type.

5. A method as claimed in any one of the preceding claims, **characterised in that** it comprises a map of the reference values of the intake air flow (Da_{cons}) or the intake air pressure, for the phases of regeneration of the nitrogen oxide trap (28), and a further map for the operating phases outside the regeneration phases, each map depending in particular on the engine speed and torque.

6. A method as claimed in any one of the preceding claims, **characterised in that** the recycling duct (30) comprises means for cooling the recycled exhaust gases.

7. A method as claimed in any one of the preceding claims, for a drive unit (10) comprising an engine (12) supercharged by a turbocompressor (18) whose turbine (24) is disposed between the take-up point (32) and the nitrogen oxide trap (28) and whose compressor (22) is disposed upstream of the regulation means (40, 42) of the intake air flow (Daᵣₑₐₗ), **characterised in that** a device (26) for cooling the supercharged air is interposed in the intake circuit (14) between the regulation means (40, 42) of the intake air flow (Daᵣₑₐₗ) and the compressor (22).

8. A method as claimed in the preceding claim, for a drive unit (10) whose turbocompressor (18) comprises a discharge duct for the exhaust gases which may be closed by a discharge valve, **characterised in that**, when the regulation means (38, 38, 40, 42) are driven as a function of the reference value of the intake air flow (Da_{cons}), the discharge valve is driven in a similar manner to the regulation means (36, 48, 40, 42) and when the regulation means (36, 48, 40, 42) are driven as a function of the intake air pressure, the discharge valve is open.

9. A method as claimed in any one of the preceding claims, **characterised in that** the means for determining the intake air flow (Daᵣₑₐₗ) comprise either a flowmeter (44) or a simulator which determines the intake air flow (Daᵣₑₐₗ) from the measurements of a temperature sensor and a pressure sensor.
